# EUROPEAN PATENT SPECIFICATION

(11) **EP 3 021 337 B1**
(45) Date of publication and mention of the grant of the patent: **03.06.2020**
(21) Application number: 15460042.3
(22) Date of filing: 18.08.2015
(51) Int. Cl.: H01G 2/10, H01G 2/16, H01C 7/12

(54) **POWER CAPACITOR WITH A PROTECTIVE DEVICE**
LEISTUNGSKONDENSATOR MIT SCHUTZVORRICHTUNG
UN CONDENSATEUR DE PUISSANCE AVEC UN DISPOSITIF DE PROTECTION

(30) Priority: 05.09.2014 PL 40937714
(43) Date of publication of application: 18.05.2016
(73) Proprietor: ZENEX Sp. z o.o., 63-200 Jarocin (PL)
(72) Inventor: Krawczyk, Zenon, 63-200 Jarocin (PL); Krawczyk, Lukasz, 63-200 Jarocin (PL)
(74) Representative: Gornicki, Pawel

(56) References cited:
- EP-A1- 0 244 281
- EP-A1- 1 793 436
- WO-A1-00/10210
- GB-A- 2 204 996
- JP-A- 2001 230 161
- JP-A- 2006 108 185
- US-B1- 6 212 055

## Description

The present invention relates to a power capacitor with a pressure and overcurrent protective device, intended in particular to compensate reactive power resulting from the operation of electrical inductive devices. Reactive power overloads the electrical system and generates energy losses. In order to reduce these losses, reactive power is compensated by using power capacitors that, usually arranged as capacitor banks, are connected in series to increase the operating voltage, in parallel to increase the system power or in star or delta configuration, allowing the capacitor bank to work in a three-phase power supply system.

A power capacitor generally has a rigid cylindrical or rectangular housing, made of metal or plastic, in which there is at least one winding coiled element, typically made of two strips of polypropylene film, one side metallized and wound in such a manner that the metallic conductive layers form the electrodes of a capacitor, whereas the separating film serves as a dielectric. The polypropylene film typically used in power capacitors has the ability of self-healing. In case of local breakdown, caused for example by overload, a small arc is formed, leading to the evaporation of a metallic coating around breakdown and the insulation regeneration, which makes the winding still operable. The winding is typically surrounded by a layer of resin, gel or paste, less often by inert gas, stabilizing and protecting it against external mechanical and electrical influences.

When the local breakdown occurs, the temperature in its vicinity may increase, causing degradation of the film with evolution of gas. Excessive gas pressure within the housing can lead to the explosion of the capacitor, and therefore such power capacitor must be equipped with a device protecting it against uncontrolled explosion, breaking the capacitor circuit when the gas pressure within the housing reaches a threshold value. Known capacitor pressure protections usually consist of a deformable surface and an integrated breakaway wire in the electrical circuit of one of the layers of the winding. The breakaway wire is usually a constricted electric conductor, sometimes containing a fuse element or a fuse connected in series. The deformable surface, deforming under increased gas pressure, tears the breakaway wire or activates a snap-action mechanism which interrupts the breakaway wire or short circuits the capacitor through a fuse. As a result, the fuse is immediately blown out and the circuit is interrupted. The fuse element or the fuse also function as overcurrent protection.

The capacitor known from European patent EP0244281, has a winding in a cylindrical rigid housing, sealed by deformable surface through which the wires are led out, which are electrically connected to the electrodes of the capacitor. One wire is connected in series to a fuse and has a fixed contact to the side of the winding. The other wire is connected to a movable contact, having the form of a flexible conductive plate that after being released by the membrane deformed by the pressure of the gas accumulated in the chamber, connects with the fixed contact and short circuits the capacitor through the fuse. As a result of the fuse being blown out, the capacitor circuit is interrupted. The space above the membrane, in which the protective device is located, is closed with a hermetic cover. In case of any leak in the membrane, the equalization of pressure on both sides of the membrane occurs and the membrane does not work properly despite the pressure increase in the hermetically sealed capacitor housing. Proper activation of the protection prevents any further use of the capacitor, even though the electrical parameters of the winding may meet the technical requirements.

In a solution according to the European patent EP 1691382, in the front wall of the capacitor there is an axially deformable wall zone, to which, from the inside, a cutting blade is fixed to ensure a successful capacitor circuit breaking when the deformable surface becomes deformed. The disadvantage of this solution is the lack of a chamber beneath the deformable surface, that allows the accumulation of gas in it. Even a small amount of gas released may cause the activation of the overpressure device and irreversible damage to the capacitor.

The aim of the invention is to provide a power capacitor for power factor correction, having a non-destructive pressure protection and an overcurrent protection, which can be restored to operation after the activation of any protection.

The present invention provides a power capacitor with a protective device according to claim 1. Embodiments of the invention are set forth with the appended claims.

The power capacitor with a protective device according to the invention is equipped with at least one, self-healing winding and also with a pressure and overcurrent protective device, comprising a flexible, axially deformable diaphragm and a fuse connected in series to the circuit of one of the electrodes of the winding, located in a rigid housing and sealed with resin, so that in the space under the flexible, axially deformable diaphragm is formed an air chamber, characterized in that inside the body of the protective device there is a circular, flexible, axially deformable diaphragm fixedly built in the cylindrical body portion of the protective device on the side of the winding, forming an air chamber from the side of the winding, wherein in the side surface of the cylindrical body portion there is a cylinder projection forming an open channel along the side surface, from the side of the air chamber, closed with a removable barrier over which a tube coaxial with the channel under the removable barrier is built. After removal of the removable barrier, forms an extension of the open channel, connecting the air chamber with the open portion of the body of the safety device. The thus formed channel, releases the gas from the air chamber.

Advantageously, the fuse is arranged in a sliding holder covering a side surface of the fuse and is connected to the circuit of the winding by disconnectable fixed contacts rigidly fixed to the body of the protective device, and the fuse is pressed against the fixed contacts by a spring resting at one end on the fuse holder whereas the other end thereof is fixed in the slot of the dowel, connected with the deformable portion of the flexible diaphragm above the air chamber, and between the sliding holder and the body wall, to which the fixed contacts are mounted there is a spring that provides an effective interruption of the capacitor circuit through pushing away the fuse link from the wall with the fixed contacts after the deformable portion of the flexible diaphragm pushes up the dowel connected thereto and releases the spring biasing the fuse link to the fixed contacts.

Advantageously, the body of the protective device above the flexible diaphragm is opened.

Advantageously, the fuse link is located in the open part of the body of the protective device, which enables the replacement of the fuse after tripping of the overcurrent protection.

Advantageously, in the body of the protective device there is a groove to the channel running along the perimeter of the flexible diaphragm to ensure the effective sealing of the flexible diaphragm and the space between the capacitor housing and the winding and the body of the protective device.

An advantage of the power capacitor with a pressure and overcurrent protective device of the present invention is that the protective device disconnects the capacitor circuit in a non-destructive manner and the capacitor can be returned to operation after the protection tripping if only the capacitor parameters meet the technical requirements.

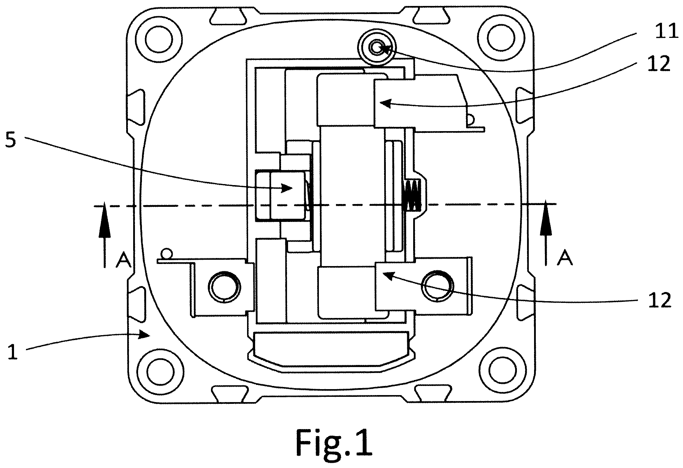

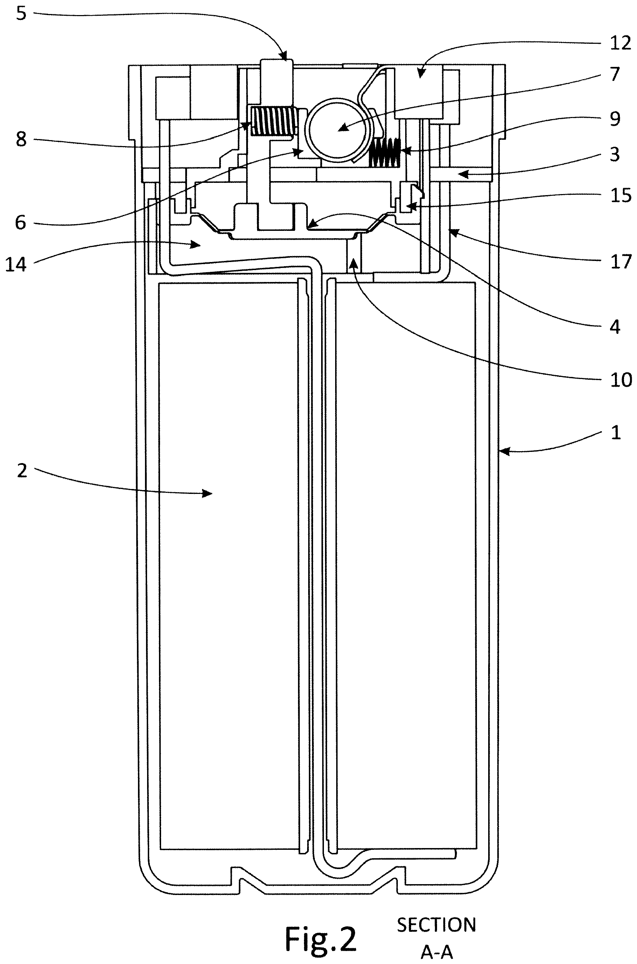

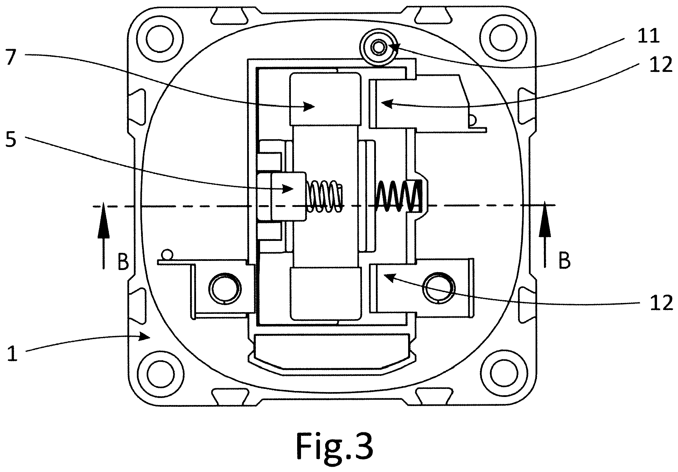

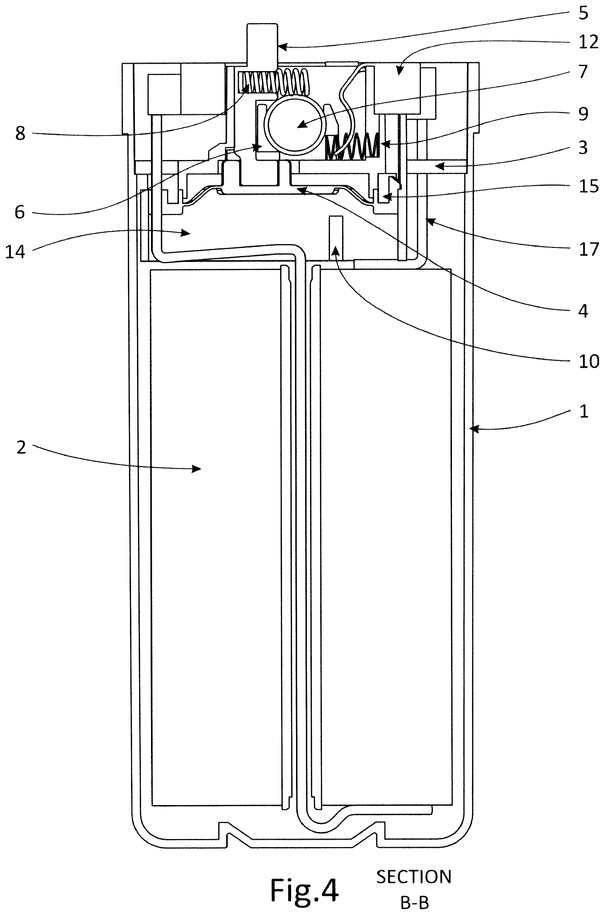

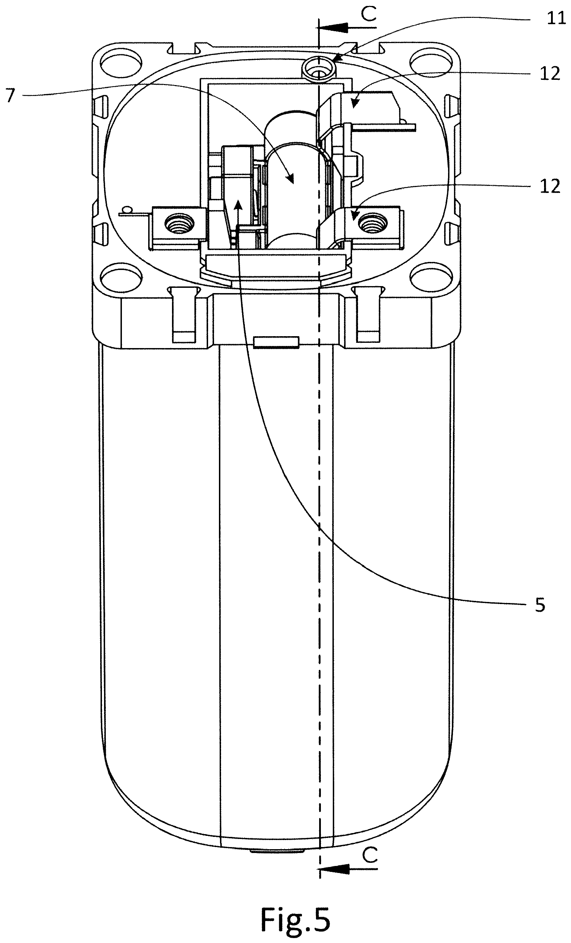

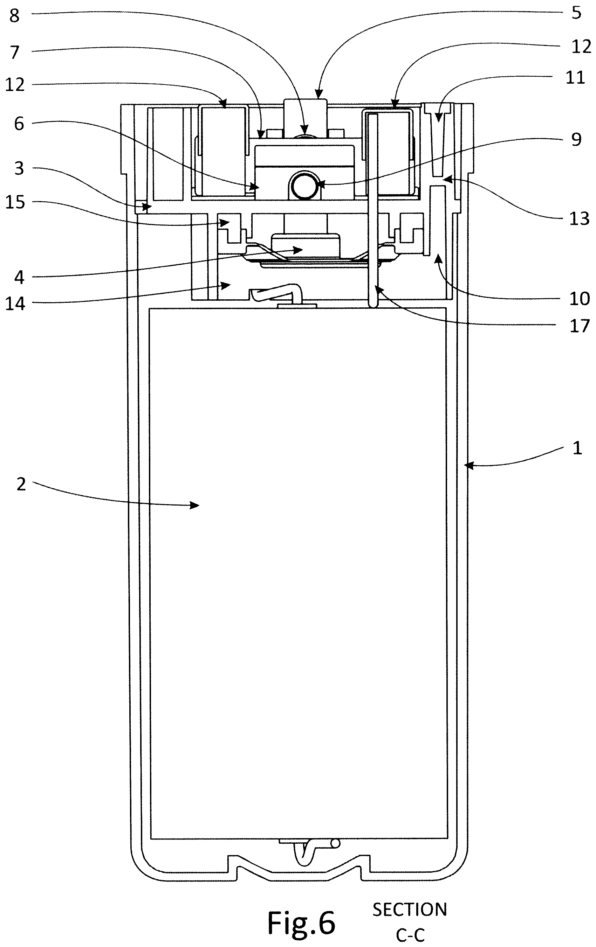

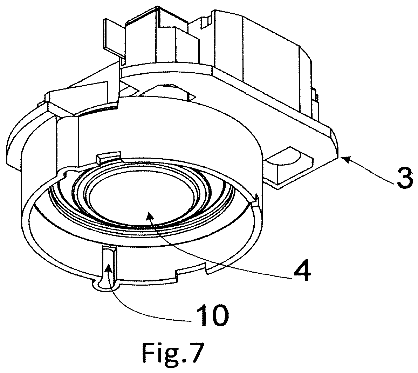

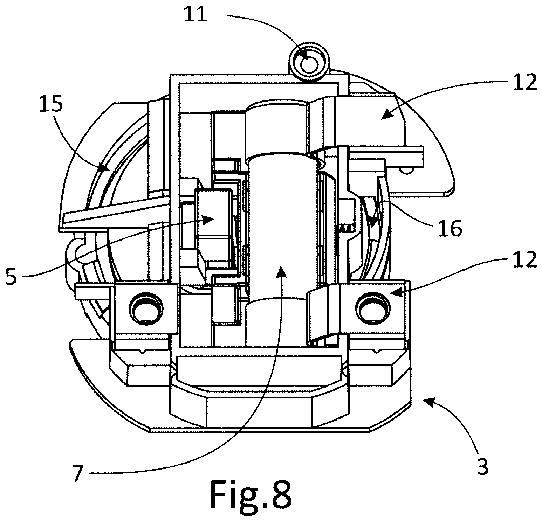

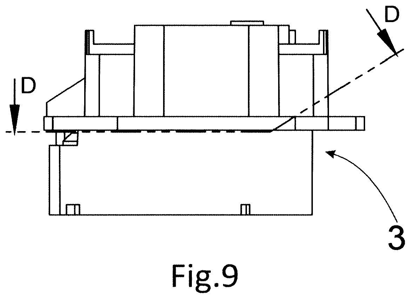

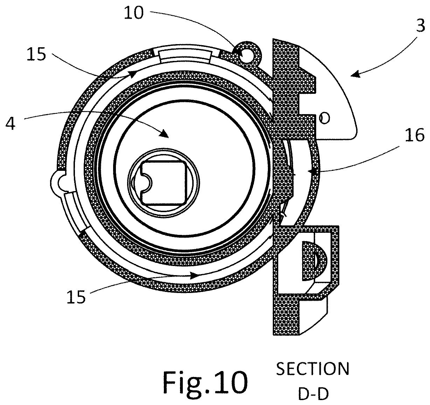

The present invention is further explained with the preferred embodiment in the accompanying drawings in which: Figure 1 - is a top view of the capacitor in an operating status, Figure 2 - is a sectional view of the capacitor along line A-A in Figure 1, Figure 3 - is a top view of the capacitor in the state after tripping, Figure 4 - is a sectional view of the capacitor along line B-B in Figure 3, Figure 5 - is a top view of the capacitor in an operating status, Figure 6 - is a sectional view of the capacitor along line C-C in Figure 5, Figure 7 - is an isometric view of the protective device in an operating status from below, and Figure 8 - is a top isometric view of the protective device in an operating status. Figure 9 - is a view of the body of the protective device, Figure 10 - is a sectional view of the body of the protective device along line D-D in Figure 9.

The power capacitor with a protective device consists of a rigid, sealed housing **1,** in which a cylindrical capacitor winding **2** is situated, and above it there is a protective device built in the body **3.** The space between the housing **1** of the capacitor and the winding **2** and the body **3** of the protective device is tightly filled with polyurethane resin, stabilizing the winding and protecting it against adverse external influences. The cylindrical portion of the body **3** of the protective device on the side of the winding contains a fixedly built-in circular, flexible, axially deformable diaphragm **4.** The surface of the diaphragm **4** and a side surface of the cylindrical portion of the body **3** of the protective device form an air chamber **14** above the winding **2,** wherein in the side surface of the cylindrical portion of the body there is a cylinder projection forming an open channel **10** along the side surface, closed with a removable barrier **13,** over which a tube **11** coaxial with the channel under the barrier is built, which after the removal of the barrier 13 forms the extension of the channel **10,** connecting the chamber **14** with the open portion of the body **3** of the protective device.

In the open part of the body, above the flexible diaphragm **4,** a rectangular, open cell is built. At the ends of one of the walls of the cell two electric contacts **12** are mounted, wherein one contact is electrically connected to the output terminal of the capacitor whereas the other one to a wire **17,** which forms an electrical connection with one of the layers of the winding **2.** The second layer the winding is electrically connected directly to the second output terminal of the capacitor, not described in the drawing. At the opposite wall of the cell there is a dowel **5** connected to the central part of an upper surface of the flexible, deformable diaphragm **4.** Between the walls there is a sliding holder **6,** covering the side surface of a standardized cylindrical fuse **7.** The standardized fuse **7** is held in a position closing the capacitor circuit by a spring **8** that is mounted in the slot of the dowel **5** and rests with the other end against the holder **6,** biasing the fuse **7** to disconnectable fixed contacts **12.** Between the holder **6** and the wall of the cell, to which the disconnectable fixed contacts **12** are mounted, there is a spring **9** which will push away the fuse from the disconnectable fixed contacts **12** after the deformable portion of the flexible diaphragm **4** pushes up the dowel **5** connected thereto and releases the spring **8.** The opening of the channel **10, 11** and releasing of gas from the chamber **14** make it possible to push the flexible diaphragm **4** to its original position, re-connect the disconnecting system **6, 7, 8, 9, 12,** close the channel **10, 11** which allows the power capacitor to continue its operation. An advantageous feature of the capacitor is the location of the fuse **7** in the open part of the body **3** of the protective device, which allows the replacement of the fuse **7** after tripping of the overcurrent protection and the continued operation of the capacitor. In the body **3** of the protective device there is a groove **16** into the channel **15** located along the perimeter of the flexible deformable diaphragm ensuring the effective sealing of the flexible diaphragm **4** and the space between the capacitor housing **1** and the winding **2** and the body **3** of the protective device.

## Claims

1. Power capacitor with a protective device, with at least one self-healing winding (2) and a pressure and overcurrent protective device, comprising a flexible, axially deformable diaphragm (4) and a fuse (7) connected in series to the circuit of one of the electrodes of the winding (2), located in a rigid housing and sealed with resin, so that an air chamber (14) is formed in the space under the flexible, axially deformable diaphragm (4), wherein inside the body **(3)** of the protective device there is the circular, flexible, axially deformable diaphragm **(4),** fixedly built in a cylindrical portion of the body **(3)** of the protective device on the side of the winding (2) forming the air chamber **(14)** from the side of the winding, wherein in the side surface of the cylindrical portion of the body **(3)** there is a cylinder projection forming an open channel **(10)** along the side surface, from the side of the air chamber **(14),** closed with a removable barrier **(13),** over which a tube **(11)** coaxial with the channel (10) under the removable barrier **(13)** is built, so that after removal of the removable barrier **(13)** it is formed an extension of the open channel **(10),** connecting the air chamber **(14)** with the open portion of the body **(3)** of the protective device, wherein opening of the channels **(10, 11)** releases gas from the air chamber **(14).**

2. Power capacitor with the protective device according to claim 1, **characterized in that** the fuse **(7)** is arranged in a sliding holder **(6)** covering the side surface of the fuse **(7)** and is connected to the circuit of the winding by disconnectable fixed contacts **(12)** rigidly fixed to the body **(3)** of the protective device, and the fuse **(7)** is biased to the fixed contacts **(12)** by a spring **(8),** resting at one end against the fuse holder **(6),** whereas the other end thereof is mounted in the slot of the dowel **(5),** connected to the deformable portion of the flexible diaphragm **(4)** above the air chamber **(14),** and between the sliding holder **(6)** and the wall of the body **(3)** to which the fixed contacts are **(12)** are mounted, there is a spring **(9).**

3. Power capacitor with the protective device according to claim 1, **characterized in that** the body **(3)** of the protective device above the flexible diaphragm **(4)** is opened.

4. Power capacitor with the protective device according to claim 1, **characterized in that** the fuse **(7)** is located in the open part of the body **(3)** of the protective device.

5. Power capacitor with the protective device according to claim 1, **characterized in that** inside the body **(3)** of the protective device there is a groove **(16)** into the channel **(15)** running around the perimeter of the flexible deformable diaphragm **(4).**

## Patentansprüche

1. Ein Leistungskondensator mit Schutzvorrichtung, mit mindestens einem selbstheilenden Wickel (2) sowie Druck- und Überstromschutz, mit einer elastischen, axial verformbaren Membran (4) und einer im Stromkreis einer der Wickelbeläge (2) in Reihe geschalteten Sicherung (7), in einem steifen und mit Harz abgedichtetem Gehäuse, sodass in dem Raum unter der elastischen, axial verformbaren Membran (4) eine Luftkammer (14) entsteht, und bei dem sich im Inneren des Korpus (3) der Schutzvorrichtung eine runde, elastische, axial verformbare Membran (4) befindet, die fest in den zylindrischen Teil des Korpus (3) der Schutzvorrichtung auf der Seite des Wickels (2) eingebaut ist und auf der Seite des Wickels (2) eine Luftkammer (14) bildet, wobei sich an der Seitenfläche des zylindrischen Teil des Korpus (3) ein zylindrischer Vorsprung befindet, der entlang der Seitenfläche auf der Seite der Luftkammer (14) einen offenen Kanal (10) bildet, der mit einer abnehmbaren Trennwand (13) geschlossen wird und über dem eine mit dem Kanal (10) unter der Trennwand (13) koaxiale Röhre (11) eingebaut ist, sodass nach der Entfernung der Trennwand (13) eine Verlängerung des offenen Kanals (10) entsteht, welche die Luftkammer (14) mit dem offenen Teil des Korpus (3) der Schutzvorrichtung verbindet, wobei durch das Öffnen der Kanäle (10, 11) das Gas aus der Luftkammer (14) freigesetzt wird.

2. Leistungskondensator mit Schutzvorrichtung nach Anspruch 1, **dadurch gekennzeichnet, dass** sich die Sicherung (7) in einem verschiebbaren, die Seitenfläche der Sicherung (7) umfassenden Halter (6) befindet und mit Hilfe von trennbaren Festkontakten (12), die fest am Korpus (3) der Schutzvorrichtung befestigt sind, in den Stromkreis der Wicklung geschaltet wird, wobei die Sicherung (7) durch eine Feder (8) in die Festkontakte (12) gedrückt wird, wobei die Feder (8) an einem Ende durch die Fassung der Sicherung (6) abgestützt wird, während das andere Ende in der Bolzenbuchse (5) sitzt, verbunden mit dem verformbaren Teil der elastischen Membran (4) über der Luftkammer (14), während sich zwischen dem verschiebbaren Halter (6) und der Wand des Korpus (3), an dem die Festkontakte (12) befestigt sind, eine Feder (9) befindet.

3. Leistungskondensator mit Schutzvorrichtung nach Anspruch 1, **dadurch gekennzeichnet, dass** der Korpus (3) der Schutzvorrichtung über der elastischen Membran (4) offen ist.

4. Leistungskondensator mit Schutzvorrichtung nach Anspruch 1, **dadurch gekennzeichnet, dass** sich die Sicherung (7) im offenen Teil des Korpus (3) der Schutzvorrichtung befindet.

5. Leistungskondensator mit Schutzvorrichtung nach Anspruch 1, **dadurch gekennzeichnet, dass** sich im Korpus (3) der Schutzvorrichtung eine Nut (16) für den um die elastische, verformbare Membran (4) verlaufenden Kanal (15) befindet.

## Revendications

1. Un condensateur de puissance avec un dispositif de protection, avec au moins un enroulement autoréparable (2) et un dispositif de protection contre la pression et les surintensités, contenant une membrane flexible axialement déformable (4) et un fusible (7) incorporé en série dans le circuit de l'un des revêtement de l'enroulement (2), placés dans un boîtier rigide et scellés avec de la résine, de sorte qu'une chambre à air (14)est formée dans l'espace situé sous la membrane flexible et axialement déformable (4), dans lequel une membrane circulaire, flexible et axialement déformable (4) est placée à l'intérieur du corps (3) du dispositif de protection du côté de l'enroulement (2), avec une saillie cylindrique sur la surface latérale de la partie cylindrique du corps (3), formant un canal ouvert (10) le long de la surface latérale, du côté de la chambre à air (14) fermé avec une cloison amovible (13), au-dessus de laquelle un tube (11) coaxial avec un canal (10) est installé sous la cloison amovible (13), de sorte que lorsque la cloison amovible (13) est retirée, il se forme un prolongement du canal ouvert (10), qui relie la chambre à air (14) à la partie ouverte du corps (3) du dispositif de sécurité, l'ouverture des canaux (10, 11) libérant du gaz de la chambre à air (14).

2. Le condensateur de puissance avec dispositif de protection selon la revendication 1, **caractérisée en ce que** le fusible (7) est placé dans un support coulissant (6) recouvrant la surface latérale du fusible (7) et il est incorporé dans le circuit d'enroulement au moyen de contacts fixes (12) détachables fixés de manière permanente au corps (3) du dispositif de protection et le fusible (7) est pressé contre les contacts fixes (12) par un ressort (8), soutenu par une extrémité sur le porte fusible (6), tandis que l'autre extrémité est placée dans le logement de la tige (5), reliée à la partie déformable de la membrane flexible (4) au-dessus de la chambre à air (14), tandis qu'il y a un ressort (9) entre la poignée coulissante (6) et la paroi du corps (3) à laquelle sont fixés les contacts fixes (12).

3. Le condensateur de puissance avec dispositif de protection selon la revendication 1, **caractérisée en ce que** le corps (3) du dispositif de protection au-dessus de la membrane flexible (4) est ouvert.

4. Le condensateur de puissance avec dispositif de protection selon la revendication 1, **caractérisée en ce que** le fusible (7) est situé dans la partie ouverte du corps (3) du dispositif de protection.

5. Le condensateur de puissance avec dispositif de protection selon la revendication 1, **caractérisée en ce que** le corps (3) du dispositif de protection présente une entrée (16) au canal (15) sur la circonférence de la membrane flexible et déformable (4).
